Europäisches Patentamt

European Patent Office

Office européen des brevets

(19)

(11) Veröffentlichungsnummer: **0 265 636**
A1

(12) **EUROPÄISCHE PATENTANMELDUNG**

(21) Anmeldenummer: 87112914.4

(22) Anmeldetag: 04.09.87

(51) Int. Cl.4: **G06F 13/36** , G06F 12/08

(30) Priorität: 03.10.86 CH 3969/86

(43) Veröffentlichungstag der Anmeldung:
04.05.88 Patentblatt 88/18

(84) Benannte Vertragsstaaten:
CH DE FR GB LI

(71) Anmelder: **BBC Brown Boveri AG**

**CH-5401 Baden(CH)**

(72) Erfinder: **Kirrmann, Hubert**
**Im Rüteli 17**
**CH-5405 Baden(CH)**

(54) **Multiprozessor mit mehreren mit Cache-Speichern ausgerüsteten Prozessoren und einem gemeinsamen Speicher.**

(57) Bei einem solchen Multiprozessor, bei welchem der gemeinsame Speicher (M) oder einer der Cache-Speicher (C1, C2) Eigner einer durch ihre Adresse bestimmten Variablen sein können und bei welchem stets nur der Eigner einer Variablen diese auf eine Leseanforderung hin auf den Bus (B) liefert, wird durch die vorliegende Erfindung das Konzept der Eignerschaft im Hinblick auf seine Implementierung mit an sich dafür nicht vorgesehenen Standardbussen sowie im Hinblick auf grösstmöglichste Effizienz weiterentwickelt.

FIG.1

EP 0 265 636 A1

**Multiprozessor mit mehreren mit Cache-Speichern ausgerüsteten Prozessoren und einem gemeinsamen Speicher**

Technisches Gebiet

Die vorliegende Erfindung betrifft einen Multiprozessor mit mehreren mit Cache-Speichern ausgerüsteten Prozessoren und einem gemeinsamen Speicher. Sie betrifft insbesondere einen Multiprozessor gemäss dem Oberbegriff des Patentanspruchs 1.

Stand der Technik

Aus einem Beitrag von S. Frank "Tightly Coupled Multiprozessor System Speeds Memory Access Time", Electronics, January 12, 1984, pp. 164-169, ist ein Multiprozessor der eingangs genannten Art bekannt. Der bekannte Multiprozessor besitzt einen gemeinsamen Speicher, der in sogenannte "quadwords" von jeweils 16 Bytes unterteilt ist. Jedem "quadword" ist eine Adresse zugeordnet. In Bezug auf einen Datentransfer im Multiprozessor ist das "quadword" die kleinste Einheit.

Zwecks Verringerung der Zugriffszeit und des Busverkehrs sind die Prozessoren jeweils mit einem Cache-Speicher ausgerüstet, der zwischen der Verarbeitungseinheit (CPU) und einem gemeinsamen Bus eingefügt ist.

In diesen Cache-Speichern befinden sich Kopien von häufig gebrauchten "quadwords", deren Originale sich konzeptuell im gemeinsamen Speicher befinden.

Da aber die lokalen Kopien verändert werden können, ohne das Original nachzuführen, kann unter Umständen eine Kopie zum Original werden, und umgekehrt. Diejenige Einheit, sei es gemeinsamer Speicher oder Cache, die die jeweils gültige Referenzkopie enthält, wird als Eigner des "quadwords" bezeichnet. Gemäss Definition besitzt der Eigner eines "quadwords" jeweils dessen korrekten gültigen Wert und muss ihn auch liefern, falls dieser Wert verlangt wird.

Jedes "quadword" kann im bekannten Multiprozessor entweder von sogenannter öffentlicher (public) oder sogenannter privater (private) Gebrauchsart (usage mode) sein. Wenn die Gebrauchsart eines "quadwords" öffentlich ist, dann ist der gemeinsame Speicher Eigner dieses "quadwords": Andere Einheiten wie die Cache-Speicher des Multiprozessors können lediglich Kopien dieses öffentlichen "quadwords" haben, jedoch alle mit einem gültigen Wert. Oeffentliche "quadwords" dürfen nicht verändert werden. Privat kann die Gebrauchsart eines "quadwords" nur in einem der Cache-Speicher des Multiprozessors sein. Der jeweilige Cache-Speicher ist auch Eigner des privaten "quadwords". Nur in diesem Cache-Speicher darf das "quadword" geändert werden.

Für den Transfer der "quadwords" innerhalb des bekannten Multiprozessors sind besondere Instruktionen vorgesehen. Mit einer Instruktion "read public" können öffentliche "quadwords" aus dem gemeinsamen Speicher in einen Cache-Speicher gelesen bzw. kopiert werden; dabei bleibt die Eignerschaft über das gelesene "quadword" jedoch beim gemeinsamen Speicher. Ein mit "read public" in einen Cache-Speicher gelesenes "quadword" darf in diesem nicht verändert werden. Damit ein "quadword" in einem der Cache-Speicher verändert werden kann, muss es erst durch eine Instruktion "read private" in den jeweiligen Cache-Speicher gelesen und dadurch privatisiert werden. Grundsätzlich beobachten alle Einheiten des bekannten Multiprozessors die Aktivität auf dem Bus. Wenn einer der Cache-Speicher ein "quadword" mit "read private" liest, so registrieren dies die übrigen Cache-Speicher und markieren daraufhin bei sich jeweils ihre Kopie des entsprechenden "quadwords" als ungültig.

Beim bekannten Multiprozessor muss jeweils der Eigner eines "quadwords" dieses auf eine Leseanforderung eines Nicht-Eigners hin auf den Bus liefern. Ist der gemeinsame Speicher nicht Eigner des angeforderten "quadwords", so ignoriert er die Leseanforderung. Im gemeinsamen Speicher ist für jedes "quadword" ein zusätzliches Bit (additional mode bit) vorgesehen, dass den gemeinsamen Speicher als Eigner oder Nicht-Eigner des jeweiligen "quadwords" kennzeichnet.

Wenn beim bekannten Multiprozessor ein "quadword" aus einem der Cache-Speicher verdrängt wird, so geschieht dies mit Instruktionen "write modified" oder "write unmodified", je nachdem ob das verdrängte "quadword" verändert wurde oder nicht. Mit der Instruktion "write modified" wird sowohl der aktuelle Wert des "quadwords" als auch die Eignerschaft über dieses in den gemeinsamen Speicher transferiert. Bei der Instruktion "write unmodified" geht lediglich die Eignerschaft auf den gemeinsamen Speicher über, da sich dort immer noch das Original-"quadword" befindet. Obschon der Prozessor dieses "quadword" exclusiv verlangt hatte, diente dies nicht dem Zweck seiner Veränderung, sondern womöglich der Ausführung einer unteilbaren Operation.

Beim bekannten Multiprozessor ist schliesslich noch eine Instruktion "write new data" bekannt mit der ein I/O-Gerät direkt "quadwords" im gemeinsamen Speicher verändern kann, ohne vor her diese mit "read private" für sich privatisieren zu müssen. Mit der genannten Instruktion "stiehlt" das I/O-Gerät die Eignerschaft über die "quadwords", die es ändern will von ihren jeweiligen Eignern und transferiert sie anschliessend an den gemeinsamen Speicher. Sämtliche Kopien der betroffen "quadwords" in den Cache-Speichern werden auf eine solche Instruktion hin als ungültig markiert.

Die beim bekannten Multiprozessor für den Datentransfer benötigten speziellen Instruktionen erfordern die Verwendung eines speziell für diese Instruktionen ausgebildeten Busses. Standardbusse der heute üblichen Art, wie z.B. der VME-Bus (vgl. VME-Bus Specifications Rev. C, 850703 4822 873 300 70 Philips Export B.V., Eindhoven, 1985 oder der Multibus II (Multibus ist ein Warenzeichen der Firma INTEL Corp., USA) und ist beispeilsweise beschrieben in Multibus II Architecture Specification Handbook, Intel Corp., Order No. 146077-C/1984 unterstützen die erläuterten Instruktionen nicht. Sie sind darüber hinaus für den Betrieb mit Cache-Speichern überhaupt nicht vorgesehen, da sie z.B. die gleichzeitige Uebertragung von Daten an mehrere Empfänger schlecht unterstützen. Die bekannte Lösung mit den speziellen Instruktionen für den Datentransfer über den Bus ist auch nicht softwaretransparent. So muss z.B. der Programmierer, der das Programm für die Prozessoren des bekannten Multiprozessors schreibt, von vorneherein wissen und unterscheiden, ob ein "quadword" nur zum Lesen durch einen Prozessor in dessen zugehörigen Cache-Speicher transferiert werden oder ob es dort durch den Prozessor, möglicherweise sehr viel später, auch verändert werden soll. Weitere Beispiele fehlender Softwaretransparenz können leicht angegeben werden. Beim bekannten Multiprozessor ist schliesslich die Verarbeitungsgeschwindigkeit nicht optimal. Alle lediglich zum Transfer der Eignerschaft über ein "quadword" erforderlichen Buszyklen verringern die Verarbeitungsgeschwindigkeit. Ein solcher Buszyklus ist beispielsweise stets mit der Instruktion "write unmodified" verbunden.

Darstellung der Erfindung

Es ist Aufgabe der vorliegenden Erfindung, einen Multiprozessor der eingangs genannten Art anzugeben, bei dem insbesondere Instruktionen, wie sie vorstehend beschrieben wurden, nicht erforderlich sind und der auch mit handelsüblichen Standardbussen operieren kann.

Weiter ist es Aufgabe der vorliegenden Erfindung, einen Multiprozessor der eingangs genannten Art anzugeben, der voll softwaretransparent ist.

Auch ist es Aufgabe der Erfindung, ein Multiprozessor der eingangs genannten Art anzugeben, der nur zwei Bit pro Cache-Eintrag beansprucht.

Schliesslich ist es Aufgabe der vorliegenden Erfindung, einen Multiprozessor der eingangs genannten Art anzugeben, der hinsichtlich seiner Verarbeitungsgeschwindigkeit optimiert ist.

Die genannten sowie weitere Aufgaben werden gemäss der vorliegenden Erfindung gelöst durch die Angabe eines neuen Multiprozessors mit den Merkmalen des Patentanspruchs 1.

Der Multiprozessor nach der Erfindung kann unter Verwendung von heute gebräuchlichen Standardbussen implementiert werden. Eine besondere Ausbildung des Busses zur Unterstützung spezieller Instruktionen ist nicht erforderlich. Der Multiprozessor nach der vorliegenden Erfindung garantiert darüber hinaus volle Softwaretransparenz. Der erfindungsgemässe Multiprozessor ist auch hinsichtlich seiner Verarbeitungsgeschwindigkeit optimiert. Buszyklen, die lediglich zum Transfer der Eignerschaft über eine Variable dienen, sind nicht erforderlich. Der Multiprozessor nach der vorliegenden Erfindung ist daher insbesondere für den Einsatz in prozessnahen Schichten in der Leittechnik geeignet. Im erfindungsgemässen Multiprozessor kann die hohe Verarbeitungsgeschwindigkeit moderner Prozessoren voll ausgenützt werden.

Kurze Beschreibung der Zeichnungen

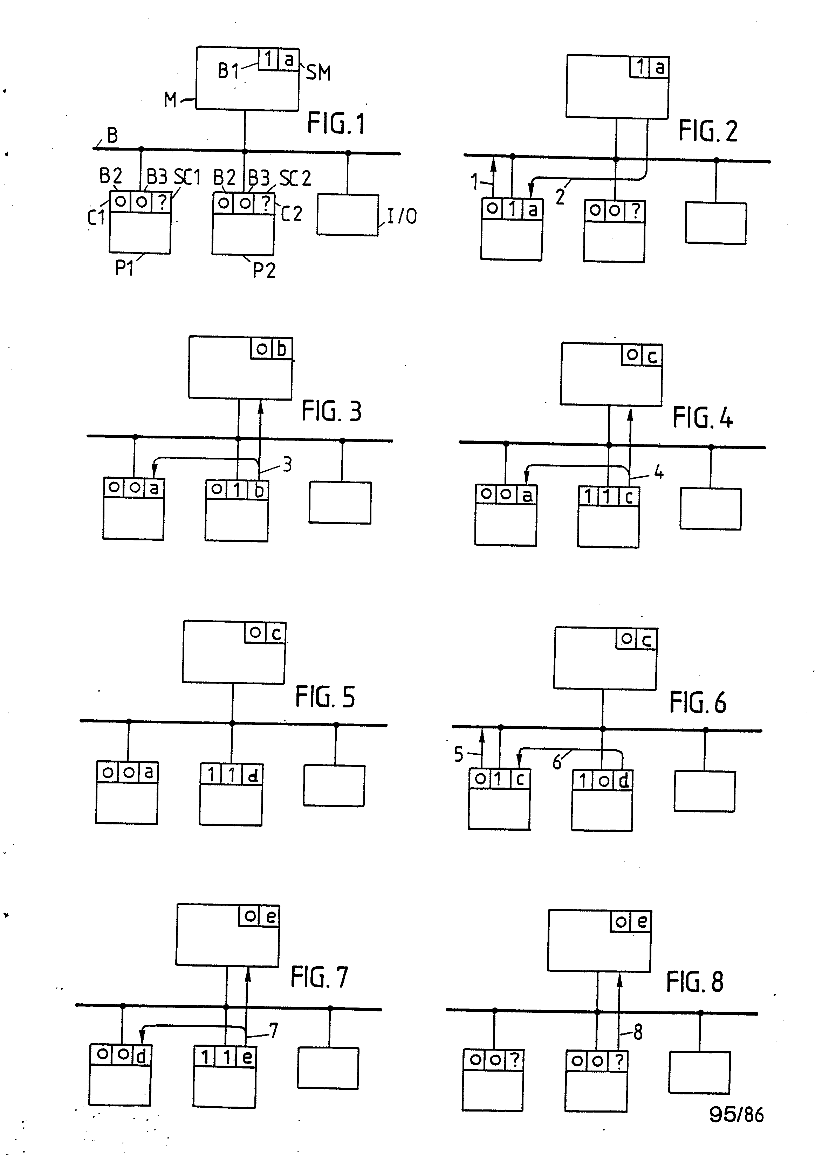

Weitere Merkmale und Vorteile der vorliegenden Erfindung ergeben sich aus der nachstehenden ausführlichen Beschreibung insbesondere unter Berücksichtigung der beigefügten Zeichnungen. Die Figuren zeigen jeweils in schematischer Darstellung einen Multiprozessor nach der Erfindung und zwar jeweils den gleichen Multiprozessor, jedoch in verschiedenen Zuständen. Der Uebersichtlichkeit der Darstellung wegen sind Bezugszeichen nur in Fig. 1 angebracht. Sie gelten jedoch stellvertretend auch für alle übrigen Figuren.

Wege zur Ausführung der Erfindung

Es wird nunmehr auf die Zeichnungen Bezug genommen. In allen Figuren ist ein Multiprozessor dargestellt, welcher an einem Bus B einen gemeinsamen Speicher M, einen ersten Prozessor P1, einen zweiten Prozessor P2 und ein I/O-Gerät I/O aufweist. Die Prozessoren P1 und P2 sind jeweils mit einem Cache-Speicher ausgerüstet und über diesen mit dem Bus B verbunden. Der mit C1 bezeichnete Cache-Speicher gehört zum ersten Prozessor P1 und der mit C2 bezeichnete Cache-Speicher zum Prozessor P2.

Innerhalb des gemeinsamen Speichers M ist ein Speicherbereich SM für eine Variable dargestellt und neben diesem Speicherbereich ein erstes Bit B1. Ist der Wert dieses ersten Bits = 1, so soll dies bedeuten, dass der gemeinsame Speicher M Eigner der in seinem Speicherbereich SM gespeicherten Variablen ist. Ist der Wert dieses ersten Bits B1 dagegen = 0, so soll dies bedeuten, dass der gemeinsame Speicher M nicht Eigner der in seinem Speicherbereich SM gespeicherten Variablen ist.

In den Cache-Speichern C1 und C2 ist gleichfalls jeweils ein Speicherbereich für eine Variable dargestellt, welcher mit SC1 bzw. SC2 bezeichnet ist. Neben diesen Speicherbereichen SC1 und SC2 sind in den Cache-Speichern C1 und C2 jeweils noch ein zweites Bit B2 und drittes Bit B3 dargestellt. In Kombination miteinander sollen diese Bits B2 und B3, abhängig von ihren Werten, in bezug auf die Variablen in den Speicherbereichen SC1 bzw. SC2 folgende vier Bedeutungen haben:

B2 = 0, B3 = 0

kein gültiger Wert
Schreiben bei Aenderung

B2 = 0, B3 = 1

keine Eignerschaft
gültiger Wert
Schreiben bei Aenderung
kein Schreiben bei Verdrängung

B2 = 1, B3 = 0

Eignerschaft
gültiger Wert
Schreiben bei Aenderung
Schreiben bei Verdrängung

B2 = 1, B3 = 1

Eignerschaft
gültiger Wert
kein Schreiben bei Aenderung
Schreiben bei Verdrängung

Im folgenden soll davon ausgegangen werden, dass der gemeinsame Speicher M sowie die Cache-Speicher C1 bzw. C2 jeweils über eine Logik verfügen, die in der Lage ist, die Bits B1 bzw.

B2 und B3 zu kontrollieren und ihren Wert in geeigneter Weise zu beeinflussen. Die Funktion dieser Logiken ergibt sich aus der nachstehenden Beschreibung.

In Fig. 1 ist der Multiprozessor in einem Zustand dargestellt, in dem eine Variable mit einem Wert a nur im gemeinsamen Speicher M gespeichert ist und zwar im Speicherbereich SM. Der gemeinsame Speicher M soll auch Eigner dieser Variablen sein. Das diese Eignerschaft kennzeichnende erste Bit B1 ist entsprechend = 1. Die beiden Cache-Speicher C1 und C2 sollen keine gültige Kopie dieser Variablen, zumindest nicht in ihren Speicherbereichen SC1 und SC2, haben. Der Zustand der beiden Speicherbereiche SC1 und SC2 sei zunächst undefiniert. Die beiden Bits B2 und B3 sind daher jeweils = 0.

Es soll nunmehr beispielsweise Prozessor P1 die genannte Variable benötigen. Sie wird dazu durch eine übliche Leseanforderung von dem dem Prozessor P1 zugeordneten Cache-Speicher C1 über den Bus B angefordert. Die Leseanforderung ist in Fig. 2 durch den Pfeil 1 gekennzeichnet. Auf die Leseanforderung hin liefert der gemeinsame Speicher M den Wert a der betrachteten Variablen über den Bus B an den Cache-Speicher C1. Dies ist in Fig. 2 durch den Pfeil 2 verdeutlicht. Der sich ergebende Zustand des Multiprozessors ist ebenfalls Fig. 2 zu entnehmen. Die betrachtete Variable ist nach wie vor im Speicherbereich SM des gemeinsamen Speichers M enthalten. Der gemeinsame Speicher M ist auch noch Eigner dieser Variablen (B1 = 1). Die Eignerschaft über eine Variable geht durch eine Leseanforderung nicht verloren. Zusätzlich ist die betrachtete Variable nunmehr jedoch auch im Speicherbereich SC1 des Cache-Speichers C1 enthalten. Die SC1 zugeordneten Bits B2 und B3 weisen sie (mit B2 = 0 und B3 = 1) als gültige Kopie aus, über die allerdings keine Eignerschaft besteht.

Die betrachtete Variable kann nun vom Prozessor P1 aus dem Cache-Speicher C1 beliebig oft gelesen werden, ohne dass sich am Zustand des Multiprozessors nach Fig. 2 irgendetwas ändert.

Die betrachtete Variable kann von den Prozessoren P1 oder P2 in den Cache-Speichern C1 oder C2 jedoch auch nach Belieben geändert werden. Mit Bezug auf Fig. 3 sei beispielsweise angenommen, dass Prozessor P2 die betrachtete Variable in seinem Cache-Speicher C2 "ändert", in dem er ihr einen neuen Wert b zuweist. Durch diese Wertzuweisung wird der Cache-Speicher C2 ebenfalls nicht Eigner dieser Variablen. Die SC2 zugeordneten Bits B2 und B3 werden neu B2 = 0, B3 = 1. Um den gemeinsamen Speicher M und den weiteren Cache-Speicher C1 von der Aenderung der betrachteten Variablen in Kenntnis zusetzen, wird sie, bzw. ihr neuer Wert b, von dem Cache-Speicher C2 über den Bus B in den gemeinsamen Speicher M geschrieben (Pfeil 3). Durch dieses, wie generell durch jedes Schreiben, verliert der gemeinsame Speicher M seine Eignerschaft über die geschriebene Variable (B1 = 0). Der Cache-Speicher C1 registriert ebenfalls diesen Schreibvorgang, identifiziert die geschriebene Variable anhand ihrer Adresse und markiert, sofern er, wie hier angenommen, ebenfalls eine Kopie dieser Variablen besitzen sollte, diese als ungültig. (Durch Rücksetzen der Bits B2 und B3 auf 0). Es resultiert der in Fig. 3 dargestellte Zustand des Multiprozessors. Es soll hier angemerkt werden, dass durch den erläuterten Schreibvorgang auch der Cache-Speicher C2 die Eignerschaft über die betrachtete Variable verloren hätte, wenn er an Stelle des gemeinsamen Speichers M in deren Besitz gewesen wäre.

Mit Bezug auf Fig. 4 sei angenommen, dass Prozessor P2 die betrachtete Variable erneut verändert, indem er ihr einen Wert c zuweist. Im Gegensatz zum Aendern einer Variablen, die vor ihrer Aenderung keinen gültigen Wert besass, wird durch Aenderung einer Variablen mit einem gültigen Wert die Eignerschaft über diese Variablen gewonnen. (Die SC2 zugeordneten Bits B2 und B3 werden jeweils neu = 1.) Auch diese Aenderung wird, wie überhaupt jede Aenderung einer Variablen, über die vor ihrer Aenderung keine Eignerschaft bestand, dem gemeinsamen Speicher M sowie dem anderen Cache-Speicher C1 durch einen Schreibvorgang zur Kenntnis gebracht (Pfeil 4).

Mit Bezug auf Fig. 5 sei angenommen, dass Prozessor P2 die betrachtete Variable nochmals verändert, indem er ihr einen Wert d zuweist. Im Gegensatz zum Aendern einer Variablen, über die zuvor keine Eignerschaft bestand, wird eine Aenderung einer Variablen, über die vor ihrer Aenderung bereits die Eignerschaft bestand, dem gemeinsamen Speicher M sowie dem anderen Cache-Speicher C1 bis auf einen nachstehend noch erläuterten Ausnahmefall nicht mehr durch einen Schreibvorgang zur Kenntnis gebracht. Dadurch ist nun der Cache-Speicher C2 einziger Besitzer und auch Eigner des gültigen Werts d der betrachteten Variablen.

Benötigt nun beispielsweise, wie in Fig. 6 angenommen, der Prozessor P1 die betrachtete Variable erneut, so stellt sein zugehöriger Cache-Speicher C1 zunächst anhand der Bits B2 und B3 fest, dass er keine gültige Version dieser Variablen mehr besitzt. Er wird daraufhin die betrachtete Variable durch eine Leseanforderung über den Bus erneut anfordern (Pfeil 5). Geliefert wird die durch eine Leseanforderung angeforderte Variable stets von deren Eigner. Dies ist im angenommenen Beispielsfall der Cache-Speicher C2, der augenblicklich auch als einziger im Besitz des aktuellen Wertes d der betrachteten Variablen ist (Pfeil 6). Der gemeinsame Speicher M ignoriert die Leseanforderung des Cache-Speichers C1, da er anhand seines Bits B1 feststellt, dass er nicht Eigner der angeforderten Variablen ist.

Durch den beschriebenen Lesevorgang verliert der Cache-Speicher C2 die Eignerschaft über die gelesene Variable nicht. Er bleibt weiter Eigner der Variablen, markiert sie jedoch als "gelesen", indem er das SC2 zugeordnete Bit B3 = 0 setzt. Es resultiert der Zustand von Fig. 6. In diesem Zustand muss die nächste Aenderung der Variablen im Cache-Speicher C2 durch Prozessor P2 mit einem Schreibvorgang verbunden sein, obwohl der Cache-Speicher C2 die Eignerschaft über sie besitzt. Die ist der vorstehend erwähnte Ausnahmefall. In Fig. 7 sei dieser Fall angenommen, indem der Variablen in SC2 als neuer Wert der Wert e durch Prozessor P2 zugewiesen und anschliessend dieser Wert über den Bus B in den gemeinsamen Speicher M geschrieben wird. Der Schreibvorgang ist deshalb erforderlich, um dem Cache-Speicher C1, der zuvor die Variable gelesen hat und davon überzeugt ist, im Besitz des gültigen Werts der Variablen zu sein, ihre erneute Aenderung zur Kenntnis zu bringen. Der Cache-Speicher C1 wird auf den Schreibvorgang hin den zuvor gelesenen Wert d der Variablen als ungültig markieren, indem er die SC1 zugeordneten Bits B2 und B3 jeweils = 0 setzt. Im Cache-Speicher C2 werden die entsprechenden, SC2 zugeordneten Bits wieder beide = 1. In der Folge kann die Variable in SC2 durch Prozessor P2 wieder nach Belieben weiter geändert werden, ohne dass ein Schreibvorgang erforderlich ist.

Anhand von Fig. 8 soll nun auf die Verdrängung von Variablen aus den Cache-Speichern eingegangen werden. Die Cache-Speicher weisen gegenüber dem gemeinsamen Speicher stets einen geringeren Speicherumfang auf. Sind sämtliche in den Cache-Speichern verfügbaren Speicherbereiche mit Variablen belegt und wird eine zusätzliche, noch nicht im Cache-Speicher enthaltene Variable benötigt, so muss eine andere Variable aus dem Cache-Speicher verdrängt werden, um Platz für die neue Variable zu schaffen. Es sind verschiedene Strategien für die Auswahl der Variablen bekannt, die im jeweiligen Fall von der Verdrängung betroffen sind. Es sei jetzt zunächst angenommen, dass die zuvor schon laufend betrachtete Variable im Speicherbereich SC1 des Cache-Speichers C1 gerade von der Verdrängung betroffen ist. Gemäss dem zuletzt erreichten Zustand besitzt der Cache-Speicher C1 keinen gültigen Wert dieser Variablen mehr. Variable ohne gültigen Wert können einfach verdrängt und durch eine neue Variable ersetzt werden.

Es soll nun auch noch die betrachtete Variable aus dem Cache-Speicher C2 verdrängt werden. Gemäss dem zuletzt erreichten Zustand besitzt der Cache-Speicher C2 die Eignerschaft über diese Variable. Bei der Verdrängung einer Variablen aus einem Cache-Speicher, der die Eignerschaft über die Variable und insofern auch immer ihren gültigen Wert besitzt, ist stets ein Schreibvorgang in den gemeinsamen Speicher M erforderlich, um sicherzustellen, dass ihr aktueller Wert nicht verloren geht. Ausgehend vom Zustand, wie er in Fig. 7 dargestellt ist, wäre ein solcher Schreibvorgang an sich nicht erforderlich, da der gemeinsame Speicher bereits im Besitz des aktuellen Wertes e der Variablen ist. Für den Fall, dass die Verdrängung aus SC2 beispielsweise aber schon in einem Zustand, wie er in Fig. 5 oder auch in Fig. 6 dargestellt ist, erforderlich gewesen wäre, indem der gemeinsame Speicher M nicht im Besitz des aktuellen Wertes der Variablen war, wäre ihr aktueller Wert ohne den geforderten Schreibvorgang verloren gegangen. Im aktuellen Beispielsfall wird also der Cache-Speicher C2 die betrachtete Variable mit ihrem aktuellen Wert e in den gemeinsamen Speicher M schreiben (Pfeil 8 in Fig. 8). Nach dem Schreiben markiert der Cache-Speicher C2 den Wert der Variablen in seinem Speicherbereich SC2 als ungültig, indem er die SC2 zugeordneten Bits B2 und B3 = 0 setzt. Danach steht der Speicherbereich SC2, wie zuvor schon der Speicherbereich SC1 im Cache-Speicher C1, für die Aufnahme einer neuen Variablen zur Verfügung. Es ergibt sich - schliesslich der in Fig. 8 dargestellte Zustand.

An dieser Stelle sei erwähnt, dass es beim Verdrängen einer Variablen mit einem gültigen Wert, über die jedoch keine Eignerschaft besteht, keines zusätzlichen Schreibvorgangs bedarf, da der gültige Wert der Variablen immer noch mindestens einmal im Multiprozessor entweder im gemeinsamen Speicher M oder in einem Cache-Speicher vorhanden sein muss.

Als Folge der in Erläuterung von Fig. 8 angenommen Verdrängung hat der Cache-Speicher C2 die Eignerschaft über die verdrängte Variable verloren, ohne dass gleichzeitig diese Eignerschaft auf einen der anderen Speicher des Multiprozessors übergegangen wäre. Es gibt daher im Zustand des Multiprozessors, wie er in Fig. 8 dargestellt ist, keinen Eigner über die genannte Variable mehr.

Wenn nun im Zustand von Fig. 8 die betrachtete Variable durch eine Leseanforderung angefordert wird, so stellt sich die Frage, welcher der Speicher diese Leseanforderung beantwortet. Es sei beispielsweise angenommen, dass das I/O-Gerät I/O die hier jeweils betrachtete Variable zum Lesen anfordert. Wie vorstehend definiert, wird eine Variable stets nur von ihrem Eigner geliefert. Ist kein Eigner vorhanden, wie im gerade betrachteten Fall, so muss einer der Speicher die Eignerschaft neu übernehmen. Diese Aufgabe kommt jeweils dem gemeinsamen Speicher M zu; denn im gemeinsamen Speicher M ist immer dann, wenn die Eignerschaft über eine Variable verloren geht, eine gültige Kopie vorhanden.

Der gemeinsame Speicher M kann beispielsweise die Eignerschaft über eine Variable stets dann wieder übernehmen, wenn auf eine Leseanforderung der Variablen hin keiner der Cache-Speicher diese Variable bis zum Ablauf einer vorgebbaren Zeitspanne nach der Leseanforderung auf den Bus geliefert hat (time-out-Methode).

Der gemeinsame Speicher M könnte in einer speziellen Logik auch "Buchführen" über den Zustand der Cache-Speicher. Er könnte anhand dieser Buchführung jeweils feststellen, ob über eine bestimmte Variable in einem Cache-Speicher Eignerschaft besteht. Falls dies nicht der Fall ist und auch er selbst nicht Eigner ist, müsste er die Eignerschaft über die Variable übernehmen.

Der Verlust der Eignerschaft über eine bestimmte Variable könnte auch über eine eigens für diesen Zweck vorgesehene Busleitung und ein geeignetes Bussignal auf dieser Busleitung vermieden werden. Eine dafür geeignete Busleitung ist bei den meisten Standardbussen auch verfügbar. Dafür kann z.B. das obere Bit der Adresse verwendet werden. Ueber die genannte Busleitung müsste dem gemeinsamen Speicher M signalisiert werden, ob er bei einem Schreibvorgang in ihn die Eignerschaft über die Variable behalten oder neu übernehmen soll. Behalten müsste er sie bei dem anhand von Fig. 3 erläuterten Schreiben. Uebernehmen müsste er sie beim Schreiben bei Verdrängung einer Variablen.

Beim Multiprozessor nach der Erfindung gibt es noch zwei weitere Fälle, in denen die Eignerschaft über eine Variable verloren geht. Der eine dieser tritt bei Aenderung einer vor ihrer Aenderung als ungültig markierten Variablen und dem damit verbundenen Schreibvorgang auf. Dieser Fall liegt übrigens in Fig. 3 vor. Der andere dieser Fälle ist das Verändern einer Variablen im gemeinsamen Speicher durch einen durch das I/O-Gerät I/O ausgeführten Schreibvorgang. Durch einen solchen Schreibvorgang verliert der gemeinsame Speicher M, oder auch einer der Cache-Speicher, die Eignerschaft über die vom Schreibvorgang betroffene Variable, ohne dass das I/O-Gerät diese Eignerschaft übernimmt. Bei Standard-I/O-Geräten, die vornehmlich im erfindungsgemässen Multiprozessor verwendet werden sollen, ist eine solche Eignerschaft nicht vorgesehen. Die Rückgewinnung der Eignerschaft kann auch in diesen beiden Fällen nach einer der drei obengenannten Methoden erfolgen.

Der gemeinsame Speicher M kann auch so ausgebildet sein, dass er in der Lage ist, die Aktivität auf dem Bus B mitzuverfolgen, um immer dann, wenn eine Variable von einem Cache-Speicher über den Bus B auf eine Leseaufforderung eines anderen Cache-Speichers oder auch des I/O-Geräts hin übertragen wird, die übertragene Variable bei sich zu aktualisieren. Der gemeinsame Speicher M muss dazu Lesezugriffe auf eine Variable, deren Eigner er nicht ist, als Schreibzugriffe in ihn selbst interpretieren. Durch eine derartige Ausbildung des gemeinsamen Speichers erübrigt sich das Schreiben bei Verdrängung einer als "gelesen" markierten Variablen (B2 = 1, B3 = 0) aus einem Cache-Speicher.

Gegenstand der vorstehend erläuterten Ausführungsbeispiel war ein Multiprozessor mit lediglich zwei Prozessoren, zwei ihnen zugeordneten Cache-Speichern sowie nur einem I/O-Gerät. Die Beschränkung auf diese geringe Zahl von Komponenten erfolgte lediglich aus Gründen einer einfacheren und verständlicheren Erläuterung. Es versteht sich, dass die Erfindung auch bei Multiprozessoren mit wesentlich mehr Komponenten anwendbar ist. Gerade bei einer gröseren Anzahl von Prozessoren kommen die erfindungsgemässen Vorteile erst richtig zum Tragen.

**Ansprüche**

1. Multiprozessor mit mehreren mit Cache-Speichern (C1, C2) ausgerüsteten Prozessoren (P1, P2) und einem gemeinsamen Speicher (M), die über einen Bus (B) miteinander verbunden sind,
-bei welchem der gemeinsame Speicher (M) oder einer der Cache-Speicher (C1, C2) Eigner einer durch ihre Adresse bestimmten Variablen sein können und
-bei welchem stets nur der Eigner einer Variablen diese auf eine Leseanforderung hin auf den Bus liefert,
dadurch gekennzeichnet,
-dass jeder Prozessor die in seinem Cache-Speicher vorhandenen Variablen nach Belieben ändern kann,
-dass ein Cache-Speicher, in dem eine Variable mit einem gültigen Wert durch seinen zugehörigen Prozessor geändert wird, dadurch Eigner dieser Variablen wird,
-dass bei jeder Aenderung einer Variablen in einem der Cache-Speicher, deren Eigner der jeweilige Cache-Speicher vor ihrer Aenderung nicht war oder deren Eigner er zwar war, die jedoch vor ihrer Aenderung auf eine Leseaufforderung hin von ihm auf den Bus geliefert wurde, deren neuer Wert über den Bus in den gemeinsamen Speicher geschrieben wird,

-dass zumindest bei diesem Schreiben der gemeinsame Speicher oder auch ein anderer der Cache-Speicher die Eignerschaft über die geschriebene Variable verliert,
- dass bei jedem Schreiben einer Variablen über den Bus in den gemeinsamen Speicher diese Variable in allen Cache-Speichern bis auf den ggf. schreibenden Cache-Speicher als ungültig markiert wird,
-dass bei Verdrängung einer Variablen aus einem Cache-Speicher, über die der jeweilige Cache-Speicher gerade die Eignerschaft besitzt, die genannte Variable über den Bus in den gemeinsamen Speicher geschrieben wird
und
-dass der gemeinsame Speicher zumindest bei einer Verdrängung einer Variablen aus einem der Cache-Speicher, der gerade die Eignerschaft über diese Variable besitzt, die Eignerschaft über diese Variable übernimmt.

2. Multiprozessor nach Anspruch 1, dadurch gekennzeichnet, dass der gemeinsame Speicher (M) bei jeder Leseanforderung einer Variablen, deren Eigner er nicht ist, deren Eignerschaft übernimmt, sofern nicht innerhalb einer vorgebbaren Zeitspanne nach der Leseanforderung einer der Cache-Speicher (C1, C2) die Variable auf den Bus (B) geliefert hat.

3. Multiprozessor nach Anspruch 1, dadurch gekennzeichnet, dass der gemeinsame Speicher (M) mit einer Logik ausgerüstet ist, mit deren Hilfe er über den Zustand der Cache-Speicher (C1, C2) Buchführen und anhand dieser Buchführung feststellen kann, ob über eine bestimmte Variable in einem der Cache-Speicher Eignerschaft besteht und dass er, falls dies nicht der Fall ist, die Eignerschaft über diese Variable übernimmt.

4. Multiprozessor nach Anspruch 1, dadurch gekennzeichnet, dass eine gesonderte Busleitung vorgesehen ist, dass diese Busleitung von den Cache-Speichern beaufschlagt wird und dass über diese Busleitung dem gemeinsamen Speicher von den Cache-Speichern signalisiert wird, ob er bei einem Schreibvorgang in ihm die Eignerschaft über die geschriebene Variable übernehmen oder behalten bzw. abtreten soll.

5. Multiprozessor nach Anspruch 4, dadurch gekennzeichnet, dass an den Bus weiter ein I/O-Gerät (I/O) angeschlossen ist, dass die genannte Busleitung auch von diesem I/O-Gerät beaufschlagt ist und zwar derart, dass ein Schreiben einer Variablen durch das I/O-Gerät über den Bus in den gemein samen Speicher dem Schreiben einer Variablen durch die Cache-Speicher entspricht und der gemeinsame Speicher daher auch beim Schreiben einer Variablen durch das I/O-Gerät die Eignerschaft über diese Variable übernimmt bzw. behält.

6. Multiprozessor nach Anspruch 1, dadurch gekennzeichnet, dass im gemeinsamen Speicher (M) pro Variable ein erstes Bit (B1) vorgesehen ist, das angibt, ob der gemeinsame Speicher Eigner dieser Variablen ist oder nicht.

7. Multiprozessor nach Anspruch 1, dadurch gekennzeichnet, dass in den Cache-Speichern (C1, C2) pro Variable ein zweites (B2) und ein drittes Bit (B3) vorgesehen sind, welche in Kombination miteinander angeben, dass entweder
-die ihnen zugeordnete Variable einen ungültigen Wert besitzt und bei ihrer Aenderung ein Schreibvorgang in den gemeinsamen Speicher erforderlich ist,
-die ihnen zugeordnete Variable einen gültigen Wert besitzt, der jeweilige Cache-Speicher jedoch nicht Eigner dieser Variablen und bei ihrer Aenderung, nicht jedoch ihrer Verdrängung, ein Schreibvorgang in den gemeinsamen Speicher erforderlich ist,
-die ihnen zugeordnete Variable einen jeweiligen Wert besitzt, der jeweilige Cache-Speicher Eigner dieser Variablen ist und bei ihrer Aenderung wie auch ihrer Verdrängung ein Schreibvorgang in den gemeinsamen Speicher erforderlich ist, oder
-die ihnen zugeordnete Variable einen gültigen Wert besitzt, der jeweilige Cache-Speicher Eigner dieser Variablen und nur bei ihrer Verdrängung ein Schreibvorgang in den gemeinsamen Speicher erforderlich ist.

8. Multiprozessor nach Anspruch 1, dadurch gekennzeichnet, dass der gemeinsame Speicher (M) sämtliche Leseanforderungen von Variablen, deren Eigner er nicht ist, als Schreiben der betreffenden Variablen in ihm selbst interpretiert und den Wert der betreffenden Variablen durch den über den Bus (B) übertragenen Wert aktualisiert und dass bei einer derartigen Ausbildung des gemeinsamen Speichers das Schreiben in ihn bei Verdrängung einer Variablen aus einem der Cache-Speicher, die unmittelbar vor ihrer Verdrängung von einem anderen Cache-Speicher gelesen wurde, entfällt.

FIG.1

FIG.2

FIG. 3

FIG. 4

FIG. 5

FIG. 6

FIG. 7

FIG. 8

Europäisches
Patentamt

**EUROPÄISCHER RECHERCHENBERICHT**

Nummer der Anmeldung

EP 87 11 2914

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | THE 12TH ANNUAL INTERNATIONAL SYMPOSIUM ON COMPUTER ARCHITECTURE, Boston, Massachusetts, 17.-19. Juni 1985, Seiten 276-283, IEEE; R.H. KATZ et al.: "Implementing a cache consistency protocol" * Seite 276, Zeilen 9-11,54-56; Seite 277, Zeilen 43,44,50-65; Seite 278, Tabelle 2.2; Seite 280, Zeilen 78-80 * --- | 1,5,7,8 | G 06 F 13/36 G 06 F 12/08 |
| A | MICROPROCESSORS AND MICROSYSTEMS, Band 10, Nr. 2, März 1986, Seiten 94-100, Butterworth & Co. (Publishers) Ltd, London, GB; P.L. BORRILL: "Objective comparison of 32-bit buses" * Seite 97, Zeilen 68-90 * --- | 1,4,5,7 ,8 | |
| A | EP-A-0 149 355 (FRANK et al.) * Ansprüche 1,8; Seite 22, Zeilen 8-18; Seite 23, Zeilen 18-22; Figur 1 * ----- | 1,5-7 | RECHERCHIERTE SACHGEBIETE (Int. Cl.4) |
| | | | G 06 F 13/36 G 06 F 12/08 |

Der vorliegende Recherchenbericht wurde für alle Patentansprüche erstellt

| Recherchenort | Abschlußdatum der Recherche | Prüfer |
|---|---|---|
| DEN HAAG | 07-01-1988 | GUINGALE A. |

EPO FORM 1503 03.82 (P0403)